## Europäisches Patentamt
## European Patent Office
## Office européen des brevets

(19)

(11) Numéro de publication: **0 138 678**
**B1**

(12) **FASCICULE DE BREVET EUROPÉEN**

(45) Date de publication du fascicule du brevet:
22.07.87

(21) Numéro de dépôt: **84401887.9**

(22) Date de dépôt: **21.09.84**

(51) Int. Cl.⁴: **C 07 F 7/16,** B 01 J 23/82,
B 01 J 23/84

(54) Procédé et catalyseur avec le cesium comme additif pour la synthèse directe du diméthyldichlorosilane.

(30) Priorité: **28.09.83** FR 8315400

(43) Date de publication de la demande:
**24.04.85 Bulletin 85/17**

(45) Mention de la délivrance du brevet:
**22.07.87 Bulletin 87/30**

(84) Etats contractants désignés:
**AT BE CH DE FR GB IT LI LU NL SE**

(56) Documents cité:
**DE-B-1 161 430**
**US-A-2 380 996**

(73) Titulaire: **RHONE- POULENC SPECIALITES CHIMIQUES, "Les Miroirs" 18, Avenue d'Alsace, F-92400 Courbevoie (FR)**

(72) Inventeur: **Prud'Homme, Christian, 19, rue Commandant Faurax, F-69006 - Lyon (FR)**
Inventeur: **Simon, Gérard, 3, Clos Avril, F-38150 - Roussillon (FR)**

(74) Mandataire: **Seugnet, Jean Louis, RHONE-POULENC INTERSERVICES Service Brevets Chimie 25, quai Paul Doumer, F-92406 Courbevoie Cédex (FR)**

LIBER, STOCKHOLM 1987

## Description

La présente invention concerne un procédé et un catalyseur pour la synthèse directe du diméthyldichlorosilane.

Le procédé industriel de fabrication d'organochlorosilanes et en particulier de diméthyldichlorosilane dénommé par la suite DMCS est un procédé bien connu qui est décrit notamment dans le brevet des Etats-Unis d'Amérique n° 2 380 995, ainsi que dans l'ouvrage de Walter NOLL, Chemistry and Technology of Silicones, 1968; édition Academic Press Inc. p. 26-41.

Selon ce procédé dit de "synthèse directe" ou "synthèse de Rochow", on fabrique directement les organochlorosilanes et, en particulier, le DMCS par réaction du chlorure de méthyle sur le silicium solide en présence de cuivre comme catalyseur suivant la réaction:

$$2 CH_3 Cl + Si \rightarrow (CH_3)_2 Cl_2 Si.$$

En réalité il se forme au cours de la synthèse directe d'autres produits notamment $CH_3 Cl_3 Si$ dénommé par la suite MTCS et $(CH_3)_3 Cl Si$ dénommé par la suite TMCS.

Il se forme également d'autres sous produits comme par exemple $Me H Si Cl_2$ et, $Me_2 H Si Cl$ et des produits lourds qui sont des polysilanes, essentiellement des disilanes.

Parmi tous les produits obtenus par synthèse directe, le DMCS est le produit le plus recherché. Ce produit, après hydrolyse et polymérisation, permet d'obtenir des huiles et des gommes qui sont des produits de base pour la fabrication des silicones. Ainsi le DMCS sert à la préparation de résines de polyorganosiloxane, comme le décrivent les brevets des Etats-Unis d'Amérique n° 2 258 218 à 2 258 222, à la préparatiom d'huiles décrites dans les brevets des Etats-Unis d'Amérique n° 2 469 888 et 2 469 830 et à la préparation d'élastomère de polyorganosiloxane, décrits dans le brevet des Etats-Unis d'Amérique n° 2 448 756.

Il est connu d'utiliser le cuivre ou les composés chimiques du cuivre comme catalyseur de la réaction de synthèse directe utilisé sous la forme d'un alliage ou d'un mélange mécanique avec le silicium éventuellement disposé sur un support minéral.

De façon à améliorer le rendement en DMCS, on a déjà proposé de rajouter divers additifs au cuivre. Ces additifs peuvent être le zinc ou un halogénure de zinc (brevet U.S. 2 464 033), l'aluminium (brevets US 2 403 370 et 2 427 605), l'étain, le manganèse, le nickel et l'argent (brevet britannique 1 207 466), le cobalt (brevet britannique 907 161), le chlorure de potassium (brevet soviétique n° 307 650).

Les procédés mettant en oeuvre ces additifs permettent certes de perfectionner le procédé de synthèse directe mais ils présentent néanmoins au moins l'un des inconvénients suivants:

- la sélectivité en DMCS évalué par le rapport pondéral moyen $\frac{MTCS}{DMCS}$, et/ou par le % molaire de DMCS par rapport à la totalité des silanes obtenus demeure insuffisant;
- le temps d'amorçage et la température d'amorçage de la réaction sont trop élevés;
- l'activité moyenne du système catalytique dénommée également productivité évaluée en poids des méthylchlorosilanes (MCS) obtenus par heure et par kg de silicium introduit et le taux de transformation maximum du silicium demeurent insuffisants;
- le système catalytique est sensible aux impuretés;
- la formation de sous-produits et en particulier de disilanes demeure élevée.

La présente invention a précisément pour bout de proposer un procédé et un catalyseur pour la mise en oeuvre du procédé de synthèse directe qui ne présentent pas les inconvénients ci-dessus, ou qui permettent à tout le moint d'en atténuer sensiblement les effets.

Un but de la présente invention est de proposer un procédé et un catalyseur permettant d'obtenir:

- une sélectivité moyenne en DMCS élevée tout en augmentant la productivité c'est-à-dire la quantité de MCS produite par unité de temps et par unité de masse de contact;
- une sélectivité initiale élevée en début de réaction qui peut être maintenue jusqu'à la dégradation finale du système catalytique;
- un taux de transformation maximum de silicium élevé;
- une teneur pondérale faible en produits "lourds" par rapport aux MCS obtenus;
- une moins grande sensibilité du système catalytique vis-à-vis des impuretés qui sont un poison du catalyseur (en particulier le plomb);
- une température de réaction pas trop élevée.

Ces buts et d'autres qui apparaîtront à la lecture de la description détaillée ci-dessous sont atteints par la présente invention qui concerne en effet un procédé de fabrication de diméthyldichlorosilane par réaction de chlorure de méthyle sur une masse de contact solide formée de silicium et d'un catalyseur comportant du cuivre ou un composé du cuivre, ledit procédé étant caractérisé en ce que le catalyseur comporte en outre entre 30 et 1000 ppm (calculés en étain et/ou antimoine métal) d'au moins un métal choisi parmi l'étain et l'antimoine ou d'un composé de l'étain et/ou de l'antimoine et entre 0,05 et 4 %, de préférence entre environ 0,1 et 1,5 % (calculés en Cesium métal) de Cesium ou d'un composé de Cesium par rapport à la masse de contact solide.

Le catalyseur peut être utilisé à une teneur pondérale de 1 à 30 %, de préférence de 5 à 12 % par rapport au poids total de la masse de contact.

Le catalyseur peut être incorporé au silicium sous forme d'un alliage ou bien sous forme d'un mélange mécanique.

Comme composé du cuivre on peut utiliser à côté du cuivre métallique, notamment un halogénure de cuivre, généralement inférieur à 3 % environ.

Ces résultats peuvent être encore améliorés si on augmente la température de réaction. On obtient des résultats similaires si on effectue la réaction en lit fluidisé.

Si l'on effectue la réaction à une température inférieure à 340°C en lit agité il est souhaitable d'amorcer la réaction pendant quelques dizaines de minutes à une température supérieure à 340°C. Cet amorçage est inutile quand on opère à une température supérieure à 340°C en lit agité.

D'autres avantages et caractéristiques de la présente invention apparaîtront à la lecture des exemples suivants donnés à tire illustratif nullement limitatif.

Dans les exemples suivants, sauf mention contraire, on utilise un réacteur pilote cylindrique de diamètre intérieur 60 mm et de hauteur: 250 mm muni à sa base d'un distributeur de gaz en verre fritté. Le silicium et le catalyseur sont chargés sous forme d'une poudre dont la taille moyenne d'au moins 50 % des particules est comprise entre 60 et 200 µm.

La réaction s'effectue en lit agité et le réacteur est muni d'un élément chauffant extérieur.

## EXEMPLE 1

**Système catalytique: Cu Cl$_2$ / Cs Cl / Sn à 360°C**

Dans un réacteur vertical, cylindrique (diamètre = 60 mm), en verre, muni d'un agitateur métallique et d'un distributeur de gaz en verre fritté, on charge un poudre composée de: 210 g de silicium, 22,23 g de chlorure cuivrique, 1,902 g de chlorure de césium et 1,984 g de bronze contenant 1,9 % d'étain.

On chauffe progressivement le réacteur jusqu'à 200°C sous un courant d'azote. Puis, en continuant d'élever la température du réacteur, on ferme le robinet d'azote et on commence à introduire le chlorure de méthyle avec un débit (mesuré à 20°C) de 16 l/h.

Après deux heures de chauffage régulé à 360°C, le débit de chlorure de méthyle est porté à 39 l/h et maintenu à cette valeur, jusqu'à l'arrêt total spontané de la réaction.

Cet essai a produit des chlorosilanes pendant 13 heures, avec une productivité moyenne égale à 291 g par heure et par kg de silicium chargé dans le réacteur.

Le mélange produit est caractérisé par un rapport pondéral moyen méthyltrichlorosilane sur diméthyldichlorosilane $\frac{MTCS}{DMCS}$ égal à 0,039 et un % molaire moyen en DMCS égal à 92,7 %.

La proportion de lourds s'élève à 1,1 % (en poids).

Par chromatographie en phase vapeur, on trouve les sélectivités molaires moyennes suivantes:

Me$_3$ Si Cl: 1,58 %

Me Si Cl$_3$: 3,15 %

Le taux de transformation maximum du silicium est de 83 %.

## EXEMPLE 2

**Système catalytique: Cu Cl / Cs Cl /Sn à 360°C**

Dans un réacteur vertical, cylindrique (diamètre = 60 mm), en verre, muni d'un agitateur métallique et d'un distributeur de gaz en verre fritté, on charge une poudre composée de: 210 g de silicium, 16,37 g de chlorure cuivreux, 1,89 g de chlorure de césium et 2,23 g de bronze contenant 1,9 % d'étain.

On chauffe progressivement le réacteur jusqu'à 200°C sous un courant d'azote. Ensuite, tout en continuant de chauffer, on arrête l'azote et on commence à introduire le chlorure de méthyle avec un débit (à 20°C) de 16 l/h. Deux heures après que la température ait été stabilisée à 360°C, le débit de chlorure de méthyle est augmenté jusqu'à 39 l/h et maintenu à cette valeur jusqu'à l'arrêt spontané de la réaction.

Cet essai a produit des chlorosilanes pendant 14 heures avec une productivité moyenne égale à 269 g par heure et par kg de silicium chargé dans le réacteur.

Le mélange produit est caractérisé par un rapport pondéral moyen méthyltrichlorosilane sur diméthyldichlorosilane $\frac{MTCS}{DMCS}$ égal à 0,036 et un % molaire moyen de DMCS égal à 93,2.

La proportion de "lourds" s'élève à 1,3 % (en poids).

Par chromatographie en phase vapeur, on trouve les sélectivités molaires moyennes suivantes:

Me$_3$ Si Cl: 1,77 %

Me Si Cl$_3$: 2,91 %

Le taux de transformation maximum du silicium est de 82 %.

## EXEMPLE 3

**Système catalytique: Cu Cl / Cs Cl /Sn à 360°C**

Dans un réacteur vertical, cylindrique (diamètre = 60 mm), en verre, muni d'un agitateur métallique et d'un un oxyde de cuivre par exemple CuO et Cu$_2$O comme décrit dans le brevet US 2 464 033.

Comme halogénure de cuivre on peut utiliser du chlorure cuivrique ou le chlorure cuivreux. On a en effet mis en évidence, conformément à la présente invention, que l'on obtient de meilleurs résultats notamment en sélectivité et en taux de transformation de silicium si on introduisait le cuivre sous forme de chlorure cuivreux, ou cuivrique.

Selon un mode de réalisation particulier, le catalyseur peut contenir en outre du zinc métallique ou un composé de zinc de préférence du chlorure de zinc, ou de l'oxyde de zinc.

Le zinc peut être présent à une teneur pondérale comprise entre 0,1 et 3 % de préférence entre 0,2 et 1 % (calculée en zinc métal) en poids par rapport au poids de la masse de contact. Jusqu'à 90 % en poids du zinc de préférence jusqu'à 50 % du zinc peut être remplacé par un autre métal qui catalyse la chloration du cuivre et/ou qui forme un eutectique ou une phase à bas point de fusion avec les sels de cuivre et/ou de césium.

Comme métal pouvant convenir on peut citer l'aluminium, le cadmium, le manganèse, le nickel et l'argent.

Comme composé du césium, on peut utiliser, outre le césium pur, les halogénures, de préférence le chlorure de césium.

Il est souhaitable que la dimension particulaire du silicium soit telle que le diamètre d'au moins 50 pour cent en poids des particules soit compris entre 10 et 500 μm.

De même le catalyseur se trouve également sous forme de particules dont le diamètre moyen est avantageusement compris entre de 1 et 100 μm. Dans ces conditions de granulométrie de la masse contact on peut mettre en oeuvre la réaction de synthèse directe avec une masse de contact sous forme d'un lit fluidisé.

Le procédé de synthèse directe selon l'invention peut être mis en oeuvre de façon générale dans un des trois types d'appareillages suivants: un réacteur du type à lit agité comme celui décrit dans le brevet des Etats-Unis d'Amérique n° 2 449 821, un réacteur du type à lit fluidisé comme celui décrit dans le brevet des Etets-Unis d'Amérique n° 2 389 931 ou dans un four rotatif.

Le catalyseur peut être également utilisé déposé sur une matière minérale en particules comme le sable, la silice broyée, le gel de silice, l'alumine, la brique réfractaire broyée, les catalyseurs pour le craquage du pétrole, des zéolites et des argiles calcinées comme décrit dans le brevet français 1 545 407.

La réaction a lieu à une température comprise entre 280 et 450°C, en particulier entre 290 et 370°C.

On peut réaliser la réaction directement à la température choisie sans amorçage de la réaction à température plus élevée en particulier quand la température de réaction choisie est de l'ordre de 330°C ou plus en lit fluidisé.

La teneur pondérale en césium ou en composé de césium calculée en césium métal est comprise entre 0,05 et 4 % en poids par rapport au poids de la masse de contact de préférence entre 0,1 et 1,5 % en poids. Au-dessous de 0,05 % l'action du césium n'est pas vraiment décelable et au-dessus de 4 % en poids, le césium a un effet poison qui abaisse notamment la sélectivité.

La teneur pondérale en étain et/ou antimoine ou en composé de l'étain et/ou de l'antimoine (calculée en étain et/ou antimoine métal) est comprise entre 30 et 1 000 ppm de préférence entre 80 et 250 ppm par rapport à la masse de contact.

Il est nécessaire d'avoir au moins 30 ppm d'étain et/ou d'antimoine. On a en effet mis en évidence conformément à l'invention que les effets bénéfiques du césium ou d'un composé du césium ne sont obtenus qu'en présence d'étain et/ou d'antimoine. En outre une teneur pondérale supérieure à 1 000 ppm aurait un effet néfaste sur la réaction et notamment sur la sélectivité. L'étain qui est le métal préféré peut être ajouté sous forme de bronze ou sous forme d'un composé d'étain par exemple le chlorure d'étain.

On a mis en évidence conformément à l'invention que si l'on voulait mettre en oeuvre la réaction à température plus basse que 350-360°C tout en gardant sensiblement les mêmes avantages, on pouvait ajouter du zinc ou un composé du zinc, de préférence le chlorure de zinc à une teneur pondérale par rapport à la masse de contact comprise entre 0,1 et 3 % de préférence entre 0,2 et 1 %.

On a mis en évidence, conformément à la présente invention, que jusqu'à 90 %, de préférence jusqu'à 50 % en poids (calculée en césium métal), de césium ou de composé du césium pouvait être remplacé par un autre alcalin ou un composé d'un métal alcalin choisi parmi le lithium, le sodium, le potassium et le rubidium. Bien que l'on obtienne généralement de moins bons résultats qu'avec le césium ou un composé de césium seul, son remplacement partiel par le potassium ou le sodium permet de diminuer sensiblement le coût du catalyseur.

En utilisant un catalyseur selon l'invention on peut obtenir, lorsque la réaction est mise en oeuvre en lit agité à une température de 330-350°C, des sélectivités très élevées.

On peut ainsi obtenir un rapport pondéral moyen $\frac{MTCS}{DMCS}$ de l'ordre ou inférieur à 0,05 pouvant atteindre 0,03 et un % molaire moyen en DMCS par rapport à la totalité des silanes obtenus de l'ordre ou supérieur à 90 % pouvant pouvant atteindre 96 %, un taux de transformation maximum en silicium de l'ordre ou supérieur à 70 % et pouvant atteindre environ 85 %, une activité moyenne de l'ordre ou supérieur à 125 g de MCS/h/kg/ Si et pouvant atteindre 180 g MCS/h/kg/Si et plus.

Une sélectivité de l'ordre ou supérieure à 90 % apparaît comme particulièrement surprenante par rapport aux sélectivités que l'on obtient en utilisant des masses catalytiques du même type mais ne comportant pas de chlorure de césium comme cela apparaît à la lecture des exemples du brevet français 1 545 407.

Par ailleurs, si on utilise une masse de contact conforme à l'invention mais ne comportant pas d'étain et/ou d'antimoine, on obtient comme le montre l'exemple comparatif ci-après une masse de contact très peu active et donc inutilisable industriellement.

Le pourcentage de lourds obtenus par rapport aux MCS obtenus peut être de l'ordre de 1 % et il est

3

distributeur de gaz en verre fritté, on charge une poudre composée de: 210 g de silicium, 1,89 g de chlorure de césium, 16,37 g de chlorure cuivreux et 2,23 g de bronze contenant 1,9 % d'étain.

On chauffe progressivement le réacteur jusqu'à 200°C sous courant d'azote. Puis, en continuant d'augmenter la température du réacteur, on ferme le robinet d'azote et on commence à introduire le chlorure de méthyle avec un débit de 16 l/h (environ à 20°C). La température du réacteur est ensuite régulée à 360°C et maintenue à cette valeur jusqu'à l'arrêt complet de la réaction.

Cet essai a produit des chlorosilanes pendant 20 heures avec une productivité moyenne égale à 167 g par heure et par kg de silicium chargé dans le réacteur.

Le mélange produit est caractérisé par un rapport pondéral moyen $\frac{MTCS}{DMCS}$ égal à 0,045 et % molaire moyen de DMCS est de 92,5.

La proportion de "lourds" s'élevant à 1 % (en poids).

Par chromatographie en phase vapeur, on trouve les sélectivités molaires moyennes:

Me$_3$ Si Cl: 1,81 %

Me Si Cl$_3$: 3,63 %

Taux de conversion maximum du silicium: 74 %.


## EXEMPLE 4

**Système catalytique: Cu / Zn Cl$_2$ / Cs Cl / Sn à 345°C**

Dans un réacteur vertical, cylindrique (diamètre 60 mm), en verre, muni d'un agitateur métallique et d'un distributeur de gaz en verre fritté, on charge une poudre composée de: 210 g de silicium, 3,14 g de chlorure de zinc, 22,9 g de cuivre métallique en poudre, 1,89 g de chlorure de césium et 1,99 g de bronze contenant 1,9 % d'étain.

On chauffe progressivement le réacteur, jusqu'à 200°C sous un courant d'azote. Ensuite, tout en poursuivant le chauffage, on arrête l'azote et on introduit le chlorure de méthyle avec un débit de 16 l/h. La température du réacteur est alors régulée à 345°C. 4 heures, environ, après le début de la réaction, le débit de chlorure de méthyle est élevé progressivement jusqu'à 39 l/h. Ces conditions sont ensuite maintenues jusqu'à l'arrêt total de la réaction. Cet essai a produit des chlorosilanes pendant 18 heures avec une productivité moyenne égale à 215 g par heure et par kg de silicium chargé dans le réacteur.

Le mélange produit est caractérisé par un rapport pondéral moyen $\frac{MTCS}{DMCS}$ égal à 0,072 et le % molaire moyen de DMCS est de 89,46.

La proportion de "lourds" s'élevant à 1,81 % (en poids).

Par chromatographie en phase vapeur, on trouve les sélectivités molaires moyennes suivantes:

Me$_3$ Si Cl: 3,2 %

Me Si Cl$_3$: 5,62 %

Taux de conversion maximum de silicium: 85 %.


## EXEMPLE 5

**Système catalytique: Cu Cl / Zn Cl$_2$ / Cs Cl / Sn à 330°C**

Dans un réacteur vertical, cylindrique (diamètre 60 mm), en verre, muni d'un agitateur métallique et d'un distributeur de gaz en verre fritté, on charge une poudre composée de: 210 g de silicium, 16,4 g de chlorure cuivreux, 1,9 g de chlorure de césium, 1,53 g de chlorure de zinc et 1,99 g de bronze contenant 1,9 % d'étain.

On chauffe progressivement le réacteur jusqu'à 200°C sous un courant d'azote. Ensuite, en poursuivant le chauffage, on arrête l'azote et on commence à introduire le chlorure de méthyle avec un débit de 16 l/h.

La température du réacteur est ensuite régulée à 345°C et maintenue à cette valeur pendant environ 1 heure avant d'être abaissée à 330°C.

Le débit de chlorure de méthyle est alors porté à 26 l/h.

Le chauffage à 330°C et l'agitation sont maintenus jusqu'à l'arrêt complet et spontané de la réaction.

Cet essai a produit des chlorosilanes pendant 20 heures avec une productivité moyenne égale à 175 g par heure et par kg de silicium chargé dans le réacteur.

Le mélange produit est caractérisé par un rapport pondéral moyen $\frac{MTCS}{DMCS}$ égal à 0,042 et un % molaire moyen en DMCS de 91,78 %.

La proportion de "lourds" s'élevant à 2,3 % (en poids).

Par chromatographie en phase vapeur, on trouve les sélectivités molaires moyennes suivantes:

Me$_3$ Si Cl: 2,5 %

Me Si Cl$_3$: 3,36 %

Me$_2$ Si Cl$_2$: 91,78 %

Taux de conversion maximum de silicium: 77 %.

## EXEMPLES 6 à 9

On met en oeuvre la réaction de la même façon que dans l'exemple 1 avec 210 g de silicium sauf que l'on modifie la température de la réaction et la composition du catalyseur.

Les résultats sont rassemblés dans le tableau I ci-après:

## TABLEAU I

| EXEMPLE | | 6 | 7 | 8 | 9 |
|---|---|---|---|---|---|
| Catalyseur | (en g: Cu: | 0 | 0 | 23 | 23 |
| | CuCl: | 16,37 | 16,4 | 0 | 0 |
| | Sn*: | 2,23 | 2 | 2 | 2 |
| | ZnCl$_2$: | 0 | 1,5 | 1,5 | 3 |
| | CsCl: | 1,89 | 1,9 | 1,9 | 1,9 |
| T°C | Amorçage | sans | 345 | 345 | 345 |
| | Réaction | 360 | 330 | 330 | 330 |
| Productivité (g MCS/h/kg/si) | | 234 | 175 | 114 | 127 |
| $\frac{MTCS}{DMCS}$ pondéral moyen (en%) | | 0,042 | 0,042 | 0,083 | 0,068 |
| Sélectivité moyenne (% molaire) par rapport aux silanes obtenus | | 92,3 | 91,8 | 89 | 90,2 |
| % en poids de lourds par rapport aux MCS formés | | 1,3 | 2,3 | 3,1 | |
| Taux de transformation maximum de Si (en %) | | 74 | 78 | 85 | 88 |

* il est indiqué le poids du bronze utilisé à 1,9 % de Sn.

## EXEMPLE COMPARATIF

On met en oeuvre le procédé selon le mode opératoire de l'exemple 5 avec 210 g de silicium sauf que l'on modifie la composition du catalyseur. Les résultats sont rassemblés dans le tableau II ci-après:

## TABLEAU II

| EXEMPLE COMPARATIF | | 1 |
|---|---|---|
| Catalyseur | (en g): Cu: | 0 |
| | Cu Cl: | 16,37 |
| | bronze 0 1,9 % Sn: | 0 |
| | Zn Cl$_2$: | 1,53 |
| | Cs Cl: | 1,92 |
| T°C | Amorçage | 345 |
| | Réaction | 330 |
| Productivité (g MCS/h/kg/Si) | | 25 |
| $\frac{MTCS}{DMCS}$ pondéral moyen (en%) | | 0,076 |
| Sélectivité moyenne (% molaire) par rapport aux silanes obtenus | | 77,6 |
| % par poids de lourds par rapport aux MCS formés | | 1,5 |
| Taux de transformation maximum de Si (en %) | | 4 |

Cet exemple comparatif montre qu'en présence de césium mais en l'absence d'étain et/ou d'antimoine on obtient une masse de contact très peu active.

# 0 138 678

## Revendications

1. Procédé de fabrication de diméthyldichlorosilane par réaction de chlorure de méthyle sur une masse de contact solide formée de silicium et d'un catalyseur comportant du cuivre ou un composé du cuivre, ledit procédé étant caractérisé en ce que le catalyseur comporte en outre entre 30 et 1 000 ppm d'au moins un métal choisi parmi l'étain et l'antimoine (calculés en étain et/ou antimoine metal) ou d'un composé de l'étain et/ou de l'antimoine et entre 0,05 et 4 % (calculés en césium métal) de césium ou d'un composé du césium par rapport à la masse de contact solide.

2. Procédé selon la revendication 1, caractérisé en ce que la teneur en étain et/ou antimoine est comprise entre 80 et 250 ppm.

3. Procédé selon la revendication 1 ou 2, caractérisé en ce que la teneur en césium est comprise entre 0,1 et 1,5 %.

4. Procédé selon l'une quelconque des revendications précédentes, caractérisé en ce que le catalyseur comporte en outre de 0,1 à 3 % (calculés en zinc métal) de zinc ou d'un composé du zinc par rapport à la masse de contact solide.

5. Procédé selon la revendication 4, caractérisé en ce que jusqu'à 90 % en poids du zinc est remplacé par un métal qui catalyse la chloruration du cuivre et/ou qui forme un eutectique ou une phase à bas point de fusion avec les sels de cuivre et/ou de césium.

6. Procédé selon la revendication 5, caractérisé en ce que le métal est choisi parmi l'aluminium, le cadmium, le manganèse, le nickel et l'argent.

7. Procédé selon l'une quelconque des revendications précédentes, caractérisé en ce que jusqu'à 90 % en poids (calculé en césium métal) du césium ou du composé du césium peut être remplacé par un autre alcalin avec un composé d'un métal alcalin choisi parmi le lithium, le sodium, le potassium et le rubidium.

8. Procédé selon l'une quelconque des revendications 4 à 7, caractérisé en ce que la teneur pondérale en zinc est comprise entre 0,2 et 1 %.

9. Procédé selon l'une quelconque des revendications précédentes, caractérisé en ce que le catalyseur comportant du cuivre ou un composé du cuivre utilisé est choisi parmi le cuivre, le chlorure cuivreux et le chlorure cuivrique.

10. Catalyseur pour la mise en oeuvre d'un procédé de synthèse directe par réaction de chlorure de méthyle sur du silicium, tel que défini à l'une quelconque des revendications 1 à 9.

## Patentansprüche

1. Verfahren zur Herstellung von Dimethyldichlorsilan durch Reaktion von Methylchlorid auf einer festen Kontaktmasse, welche aus Silicium und einem Katalysator, der aus Kupfer oder einer Kupferverbindung besteht, gebildet ist, dadurch gekennzeichnet, daß der Katalysator außerdem zwischen 30 und 1000 ppm wenigstens eines Metalls, ausgewählt unter Zinn und Antimon (berechnet auf Zinn- und/oder Antimonmetall) oder einer Verbindung von Zinn und/oder Antimon und zwischen 0,05 und 4 % (berechnet auf Cäsiummetall) Cäsium oder einer Cäsiumverbindung, bezogen auf die feste Kontaktmasse, umfaßt.

2. Verfahren gemäß Anspruch 1, dadurch gekennzeichnet, daß der Gehalt an Zinn und/oder Antimon zwischen 80 und 250 ppm beträgt.

3. Verfahren gemäß Anspruch 1 oder 2, dadurch gekennzeichnet, daß der Gehalt an Cäsium zwischen 0,1 und 1,5 % beträgt.

4. Verfahren gemäß einem der vorangehenden Ansprüche, dadurch gekennzeichnet, daß der Katalysator außerdem 0,1 bis 3 % (berechnet auf Zinkmetall) an Zink oder einer Zinkverbindung, bezogen auf die feste Kontaktmasse, umfaßt.

5. Verfahren gemäß Anspruch 4, dadurch gekennzeichnet, daß bis zu 90 Gew.-% des Zinks durch ein Metall ersetzt ist, welches die Chlorierung von Kupfer katalysiert und/oder ein Eutektikum oder eine Phase mit niedrigem Schmelzpunkt mit den Kupfer- und/oder Cäsiumsalzen bildet.

6. Verfahren gemäß Anspruch 5, dadurch gekennzeichnet, daß das Metall ausgewählt ist aus Aluminium, Cadmium, Mangan, Nickel und Silber.

7. Verfahren gemäß einem der vorhergehenden Ansprüche, dadurch gekennzeichnet, daß bis zu 90 Gew.-% (berechnet auf Cäsiummetall) des Cäsiums oder der Cäsiumverbindung ersetzt sein können durch ein anderes Alkali mit einer Alkalimetallverbindung, ausgewählt unter Lithium, Natrium, Kalium und Rubidium.

8. Verfahren gemäß einem der Ansprüche 4 bis 7, dadurch gekennzeichnet, daß der Gewichtsgehalt an Zink zwischen 0,2 und 1 % beträgt.

9. Verfahren gemäß einem der vorangehenden Ansprüche, dadurch gekennzeichnet, daß der verwendete Katalysator, bestehend aus Kupfer oder einer Kupferverbindung, ausgewählt ist unter Kupfer, Kupfer(I)-Chlorid, Kupfer(II)-Chlorid.

10. Katalysator zur Ausführung eines direkten Syntheseverfahrens durch Reaktion von Methylchlorid auf Silicium, wie in einem der Ansprüche 1 bis 9 definiert.

## Claims

1. Process for the manufacture of dimethyldichlorosilane by reaction of methyl chloride with a solid contact reactant formed of silicon and a catalyst comprising copper or a copper compound, the said process being characterized in that the catalyst additionally comprises between 30 and 1,000 ppm of at least one metal chosen from tin and antimony (calculated as tin and/or antimony metal) or of a tin and/or antimony compound and between 0.05 and 4 % (calculated as caesium metal) of caesium or of a caesium compound, based on the mass of contact solid.

2. Process according to Claim 1, characterized in that the content of tin and/or antimony is between 80 and 250 ppm.

3. Process according to Claim 1 or 2, characterized in that the caesium content is between 0.1 and 1.5 %.

4. Process according to any one of the preceding claims, characterized in that the catalyst additionally comprises from 0.1 to 3 % (calculated as zinc metal) of zinc or of a zinc compound based on the solid contact reactant.

5. Process according to Claim 4, characterized in that up to 90 % by weight of zinc is replaced by a metal which catalyses the chlorination of copper and/or which forms a eutectic or a low melting point phase with copper salts and/or caesium salts.

6. Process according to Claim 5, characterized in that the metal is chosen from aluminium, cadmium, manganese, nickel and silver.

7. Process according to any one of the preceding claims, characterized in that up to 90 % by weight (calculated as caesium metal) of caesium or of the caesium compound may be replaced by another alkali with a compound of an alkali metal chosen from lithium, sodium, potassium and rubidium.

8. Process according to any one of Claims 4 to 7, characterized in that the weight content of zinc is between 0.2 and 1 %.

9. Process according to any ore of the preceding claims, characterized in that the catalyst used, comprising copper or a copper compound, is chosen from copper, cuprous chloride and cupric chloride.

10. Catalyst for making use of a process of direct synthesis by reaction of methyl chloride with silicon, such as defined in any one of Claims 1 to 9.